# EUROPEAN PATENT APPLICATION

(11) **EP 1 120 877 A1**
(43) Date of publication of application: **01.08.2001**
(21) Application number: 00500014.6
(22) Date of filing: 28.01.2000
(51) Int. Cl.: H02G 5/06

(54) **Housing for electric power distribution systems based on grouped bars**

(71) Applicant: CIAMA BUSBAR S.L., 08190 San Cugat del Valles (Barcelona) (ES)
(72) Inventor: Garcia-Maurino de Delas, Luis, 08190 Sant Cugat del Valles (Barcelona) (ES)
(74) Representative: Gonzalez Vacas, Eleuterio

(57) **Abstract**

The housing is constituted by two pairs of profiles (1-1'), (2-2'), specifically composed of two internal U-shaped profiles (1-1') mounted with their opposing concavities over the external profiles (2-2'), also U-shaped and with likewise opposite concavities to form a tubular body (9) having a variable section, the height of which is modified by profiles (1-1') having different amplitude in their middle branch (3), the width in turn being modified by varying their relative separation when mounted on the external profiles (2-2') to which they are attached by means of screws or rivets. Furthermore, coupling between the four profiles is implemented through impervious joints (8) and toothed surfaces (10), thus providing the tubular body (9) with perfect imperviousness, high mechanical strength, high resistance against electrodynamic stresses and favorable service conditions in the event of ground connection failure.

## Description

### OBJECT OF THE INVENTION

The present invention lies within the field of electric power distribution and transport systems, and more specifically systems which are formed by grouped bars placed under adequate pressure inside a conduit which further includes a means of implementing bypasses.

The object of the invention consists in providing a housing or means of conduction allowing for section variations based on the number of conductor bars and their width, said housing providing optimum service in regard to both mechanical strength and imperviousness.

### BACKGROUND OF THE INVENTION

In the Spanish invention patent with application number 9201647, several improvements are described relating to distribution, attachment and connecting systems in electric conduction means, and more specifically to the attachment means between the conductor bars and bar attachment support in the corresponding conduits, which support is composed of two opposite parts related through spacers and adapted to the size of the bars, said parts being fitted with lodgings for the bar edges which also receive clamp-type metal parts designed to prevent the movement of said bars along upright columns, further complemented with elastic parts which prevent the conduct bar vibrations to be transmitted to the conduit.

More specifically, in said invention patent the housing is formed by four plates fitted along their longitudinal edges with elbows providing a mutual tongue-and-groove joint to form a tubular body, a solution which permits a sufficiently solid housing structure to be obtained but which however precludes minimum dimensional adjustment thereof, so that the bar attachment end parts become essential in order to compensate the dimensional differences between the bar pack and the housing and avoid having to provide specifically dimensioned housings for each particular case.

### DESCRIPTION OF THE INVENTION

The housing proposed by the invention solves the above shortcomings in a fully satisfactory fashion by structuring the grouped bar assembly with a minimum number of components and offering maximum versatility and compatibility with other products or systems.

Toward this end and more specifically, said housing is formed by two pairs of profiles made of a material offering good electricity and heat conduction properties and shaped in the form of a U, in a manner that the conjunction of the four profiles constitutes a tubular body of a rectangular section for lodging the bars and two opposite and symmetrical end conduits onto which are mounted the means which receive the spaced-apart ends or tips of the conductor bars lodged inside the tubular body, which is hermetic as a result of the attachment between the profiles being fitted with impervious joints.

Even more specifically, two similar profiles forming one of the previously mentioned pairs are mounted in a way that their opposing concavities determine the width of the tubular body, depending on the number of conductor bars contained, their middle branch being adjusted to the width of the bars, the ends of said first pair of profiles receiving the second pair of profiles with their concavities likewise in opposite position, adapted and attached by means of screws, rivets or some other means to the lateral branches of the first pair of profiles and thus determining their mutual separation, these two latter profiles forming the previously mentioned conduits.

The external faces of the side branches in the first pair of profiles are fitted with grooves into which fit the impervious joints, which joints extend out of said branches and become deformed against the external profiles for final attachment purposes.

According to another feature of the invention, the four profiles comprised in the housing present profusely toothed interfaces, so that upon closing the housing by the riveting or screwing of both pairs of profiles, a nailing effect takes place when the teeth in the complementary surfaces drive through the non-conductor aluminum oxide layer and thus provide the assembly with high electric conductivity and a good measure of equipontetiality, namely great operational safety for the housing in the form of resistance to electrodynamic stresses, in addition to electric safety in the event of ground connection failures.

According to the structure thus described, the use of internal profiles with different middle branch amplitudes permits the housing to accommodate different conductor bar widths, while the larger or smaller spacing between said internal profiles, when attached to the exterior, enables the housing to be adapted to different numbers of conductor bars of various thickness.

### DESCRIPTION OF THE DRAWINGS

In order to complement the description as set forth and help toward a better understanding of the characteristics of the invention through a preferred example of a practical embodiment, a set of drawings is attached as an integral part of the description wherein the following is represented in a, descriptive and nonlimiting character:

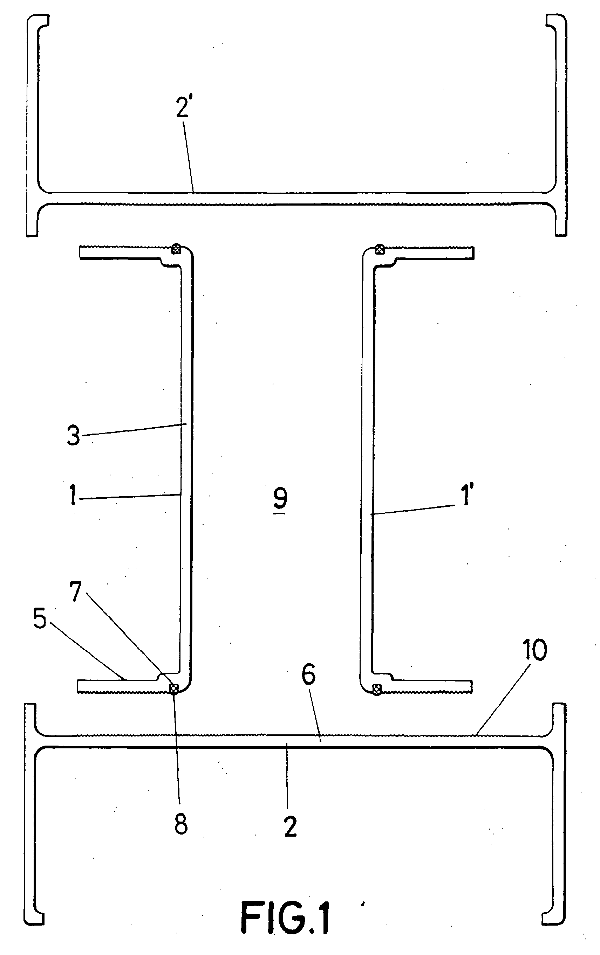

Figure 1 shows an exploded sectioned view of a housing for electric power distribution systems based on grouped bars according to the object of the present invention.
Figure 2 shows, also according to a sectioned view, the duly mounted assembly shown in the previous figure, where the arrangement of the conductor bars is represented by broken lines.

### PREFERRED EMBODIMENT OF THE INVENTION

In the light of these figures, it is evident that the housing being advocated is structured as a four-profile functional combination, namely two internal profiles (1-1') and two external profiles (2-2').

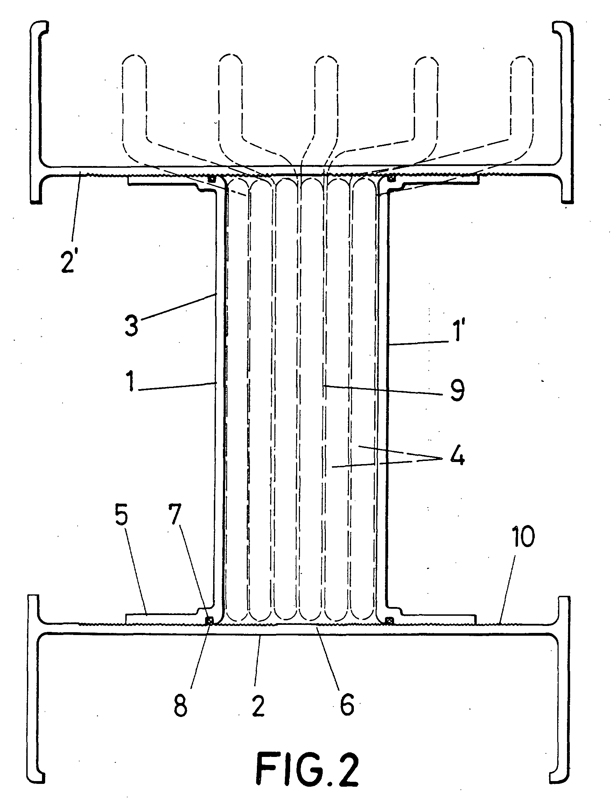

The internal profiles (1-1'), mutually identical, adopt a U shape, their middle branch adapting to the width of the conductor bars (4) to be lodged in the housing, and- this is particularly evident in Figure 2, while the spacing between their middle branches (3) is variable as a function of the number and the thickness of conductor bars installed inside the housing.

These internal profiles (1-1') are mounted with their concavities placed in opposite position inside the external profiles (2-2'), which in turn are mutually identical and also adopt a U shape with their concavities in an opposite arrangement, so that the lateral branches (5) in the internal profiles (1-1') lean on the middle branch (6) of the external profiles (2-2'), onto which they are definitely attached, after establishing their adequate relative position, by means of rivets, screws or some other appropriate means not shown in the drawings.

The internal profiles (1-1') incorporate, on the external face of their lateral branches (5), respective grooves (7) each receiving an impervious joint which provides an impervious closure between the four profiles and consequently in the tubular body (9) defined by said profiles where the bars (4) are to be lodged.

Furthermore, and in order to achieve optimum electric continuity between the four profiles (1-2), which are preferably made of aluminum, both the external face of the lateral branches (5) in the internal profiles (1-1') and the external face corresponding to the middle branch (6) of the external profiles (2-2') are profusely toothed (10), so that, upon assembling and tightening one profile over the other, as previously pointed out, the interfacing teeth become nailed into one another and break the nonconducting aluminum oxide layer in the profiles to provide the tubular body (9) with the high electric conductivity and adequate degree of equipotentiality also referred to above.

## Claims

1. Housing for electric power distribution systems based on grouped bars defining a tubular body for lodging said bars that is dimensionally adapted to the width, thickness and number of bars, which tubular body is formed by two external conduits open to the exterior and designed for by-pass installation, characteristic in that it is constituted by combining two pairs of profiles (1-1'), (2-1'), the first two profiles (1-1') being mutually identical, U-shaped and mounted with their concavities in opposite position and with a variable spacing designed to determine the width of the tubular body, and the second two profiles (2-2'), also mutually identical and U-shaped, being mounted externally in respect to the first two and receiving lateral branches (5) through their middle branch (6) and onto which they are attached in any relative position with the help of screws, rivets or similar elements, so that, by using internal profiles (1-1') having a different length in their middle branch (3) and by means of a larger or smaller spacing of said profiles (1-1') at their point of attachment to the external profiles (2-2'), both the width and the height of the resulting tubular body (9) may be varied at will in order to adapt it to the size and number of conductor bars (4).

2. Housing for electric power distribution systems based on grouped bars, according to claim 1, characteristic in that the internal profiles (1-1') incorporate, on the external face of their lateral branches, respective grooves (7) each receiving an impervious joint (8) which, when the profiles (1-1') are coupled and attached to the external profiles (2-2'), provide optimum imperviousness to the tubular body (9).

3. Housing for electric power distribution systems based on grouped bars, according to claim 1, characteristic in that the internal profiles (1-1') present an external face on their lateral branches (5) that is profusely toothed (10), and the external profiles (2-2') present the external face of their middle branch (6) equally profusely toothed (10), so that upon tightening the four profiles in the course of attaching them, their respective teeth (10) become nailed and thereby improve the mechanical strength of the tubular body (9) and remove the non-conductive aluminum oxide layer in the profiles and thus improve also the resistance against electrodynamic stresses and the electric safety in the event of ground connection failures.
